# FASCICULE DE BREVET EUROPEEN

(11) **EP 3 948 993 B1**
(45) Date de publication et mention de la délivrance du brevet: **19.04.2023**
(21) Numéro de dépôt: 20724144.9
(22) Date de dépôt: 12.05.2020
(51) Int. Cl.: H01M 6/52, H01M 10/54, C22B 7/00, C22B 1/00, C22B 26/12

(54) **PROCEDE DE BROYAGE D'UN GENERATEUR ELECTROCHIMIQUE**
VERFAHREN ZUM ZERKLEINERN EINES ELEKTROCHEMISCHEN GENERATORS
PROCESS FOR CRUSHING AN ELECTROCHEMICAL GENERATOR

(30) Priorité: 15.05.2019 FR 1905066
(43) Date de publication de la demande: 09.02.2022
(73) Titulaire: Commissariat à l'énergie atomique et aux énergies alternatives, 75015 Paris (FR)
(72) Inventeur: BILLY, Emmanuel, 38054 GRENOBLE CEDEX 09 (FR)
(74) Mandataire: Brevalex
(86) Numéro de dépôt international: PCT/EP2020/063203
(87) Numéro de publication internationale: WO 2020/229477

(56) Documents cités:
- EP-A1- 1 981 115
- WO-A1-2015/192743
- CN-B- 104 124 487

## Description

### DOMAINE TECHNIQUE

La présente invention se rapporte à un procédé de broyage d'un générateur électrochimique, tel qu'un accumulateur ou une batterie Li-lon, Na-lon, Lithium-métal, notamment en vue de son recyclage et/ou de son stockage.

Plus spécifiquement, il s'agit d'un procédé dans lequel on réalise le broyage d'un générateur électrochimique dans une solution contenant un liquide ionique et une espèce active redox. L'espèce active redox permet de décharger le générateur électrochimique. Le liquide ionique permet de réaliser cette étape en toute sécurité et notamment en évitant la formation d'atmosphère explosive.

Les fractions valorisables du générateur électrochimique peuvent ensuite être recyclées en toute sécurité.

### ÉTAT DE LA TECHNIQUE ANTÉRIEURE

Un générateur électrochimique est un dispositif de production d'électricité convertissant de l'énergie chimique en énergie électrique. Il peut s'agir, par exemple, de piles ou d'accumulateurs.

Le marché des accumulateurs, et notamment des accumulateurs au lithium, de type Li-ion, est aujourd'hui en forte expansion, d'une part, du fait des applications dites nomades (smartphone, ordinateur, appareil photographique,...) et, d'autre part, du fait des nouvelles applications liées à la mobilité (véhicules électriques et hybrides) et aux applications dites stationnaires (connectées au réseau électrique).

En raison de la croissance du nombre d'accumulateurs au cours des dernières années, la question de leur recyclage est donc devenue un enjeu majeur.

Classiquement, un accumulateur lithium-ion comprend une anode, une cathode, un séparateur, un électrolyte et un boitier.

Généralement, l'anode est formée à partir de graphite mélangé à un liant de type PVDF déposé sur une feuille de cuivre et la cathode est un matériau d'insertion de lithium métallique (par exemple, LiCoOz, LiMnOz, LiNiOz, Li₃NiMnCoO₆, ou LiFePO₄) mélangé à un liant et déposé sur une feuille d'aluminium.

L'électrolyte est un mélange de solvants non aqueux et de sels de lithium, et, éventuellement, d'additifs pour ralentir les réactions secondaires.

Le fonctionnement est le suivant : lors de la charge, le lithium se désintercale de l'oxyde métallique et s'intercale dans le graphite, où il est thermodynamiquement instable. Lors de la décharge, le processus est inversé et les ions lithium sont intercalés dans l'oxyde métallique de lithium.

Au fur et à mesure de son utilisation, le vieillissement entraîne une perte de capacité et la cellule doit être recyclée.

Cependant, un nombre important d'accumulateurs ou de batteries d'accumulateurs à recycler sont encore au moins partiellement chargés et leur broyage produit des étincelles et des inflammations importantes voire des explosions notamment avec les piles lithium primaires (Li-SOCl₂).

Les cellules endommagées doivent également être recyclées. Cependant, ces cellules peuvent avoir des dépôts de lithium métallique sur l'anode, qui, exposés à l'air ou à l'eau, sont très réactifs.

Les cellules, en fin de vie et/ou endommagées, à recycler doivent donc être traitées avec la plus grande précaution.

Le procédé de recyclage des accumulateurs comprend plusieurs étapes :
- une étape de prétraitement incluant une phase de démantèlement et une phase de mise en sécurité,
- des traitements thermiques et/ou hydrométallurgiques pour récupérer les différents matériaux et métaux valorisables contenus dans ces piles et accumulateurs.

À ce jour, le principal problème réside dans la phase de mise en sécurité de ces systèmes électrochimiques à base de lithium (primaire et secondaire).

En effet, lors d'une perte de confinement il se produit des fuites de l'électrolyte, produit toxique, inflammable et corrosif, sous forme liquide mais également gazeux. Les vapeurs ainsi générées et mélangées avec l'air peuvent alors former une atmosphère explosive (ATEX). Celle-ci est susceptible de s'enflammer au contact d'une source d'inflammation du type étincelle ou d'une surface chaude. Il en résulte alors une explosion provoquant des effets thermiques et des effets de pression. De plus, les sels d'électrolyte tels que l'hexafluorophosphate de lithium LiPF₆, le tétrafluoborate de lithium LiBF₄, le perchlorate de lithium LiClO₄, l'hexafluoroarsenate de lithium LiAsF₆ peuvent dégager des fumées particulièrement toxiques et corrosives contenant du phosphore, du fluor et/ou du lithium. Par exemple, il peut y avoir la formation d'acide fluorhydrique (HF) lors de la dégradation thermique de batteries Li-ion.

Pour remédier à ces inconvénients, il est possible de broyer les batteries dans une enceinte à atmosphère et pression contrôlée. À titre d'exemple, le document WO 2005/101564 A1 décrit un procédé de recyclage de batterie à anode de lithium par voie hydrométallurgique, à température ambiante et sous atmosphère inerte. L'atmosphère comprend de l'argon et/ou du dioxyde de carbone. Les deux gaz vont chasser l'oxygène et former un ciel gazeux de protection au-dessus de la charge broyée. La présence de dioxyde de carbone va conduire à initier une passivation du lithium métallique par formation de carbonate de lithium en surface, ce qui ralentit la réactivité de ce métal. L'hydrolyse de la charge broyée contenant du lithium conduit à la formation d'hydrogène. Pour éviter les risques d'inflammation de l'hydrogène et d'explosion, la charge broyée contenant le lithium est ajoutée de manière très contrôlée dans la solution aqueuse et une très forte turbulence au-dessus du bain est créée. Cette opération est associée à un appauvrissement de l'atmosphère en oxygène. L'eau devient riche en hydroxyde de lithium et le lithium est récupéré par addition de carbonate de sodium ou d'acide phosphorique.

Dans le procédé du brevet US 5,888,463, la mise en sécurité des piles et accumulateurs est réalisée par un procédé cryogénique. Les piles et accumulateurs sont congelés dans de l'azote liquide à -196° C avant d'être broyés. Le broyat est ensuite immergé dans de l'eau. Pour éviter la formation de H₂S, le pH est maintenu à un pH d'au moins 10 par addition de LiOH. Les sels de lithium formés (Li₂SO₄, LiCI) sont précipités sous forme de carbonate par ajout de carbonate de sodium.

Le document CA 2 313 173 A1 décrit un procédé de recyclage de piles ioniques au lithium. Les piles sont préalablement découpées dans une atmosphère inerte dépourvue d'eau. Un premier solvant organique (acétonitrile) permet de dissoudre l'électrolyte et un second solvant organique (NMP) permet de dissoudre le liant. Le matériau d'insertion particulaire est ensuite séparé de la solution et réduit par électrolyse.

Dans le document WO 2011/113860 A1, une méthode dite sèche (« Dry-Technology ») est décrite. La température du broyeur est maintenue entre 40 et 50°C et le mélange d'hydrogène et d'oxygène, libéré des batteries, est éliminé, par un mouvement d'air cyclonique, pour minimiser les risques de départ de feu. Les morceaux de batterie et de poussière, récupérés après tamisage, sont refroidis jusqu'à la température ambiante. L'extraction du lithium semble se faire par réaction avec l'oxygène et l'humidité de l'air, occasionnant des risques liés à la présence simultanée d'hydrogène, d'oxygène et de chaleur propice à la combustion et l'explosion. De plus, l'électrolyte est dégradé, générant des risques, des pertes et des difficultés vis-à-vis de la gestion des poussières et des gaz.

Le procédé UmiCore VAL'EAS^{™}, décrit dans l'article de Georgi-Maschler et al. (« Development of a recycling process for Li-ion batteries », Journal of Power Sources 207 (2012) 173-182) combine des traitements pyrométallurgiques et hydrométallurgiques. Les batteries, démantelées, sont directement introduites dans un four. Le traitement pyrométallurgique permet de les désactiver : l'électrolyte s'évapore à près de 300 °C; les plastiques sont pyrolisés à 700 °C et le reste est finalement fondu et réduit à 1200-1450 °C. Une partie des matières organiques contenues dans les piles sert d'agent réducteur dans le procédé. L'aluminium et le lithium sont perdus. Le fer, le cuivre, et le manganèse sont récupérés en solution aqueuse. Le cobalt et le nickel sont récupérés sous forme de LiCoO₂ et Ni(OH)₂ et recyclés pour former des matériaux de cathode. Cependant, ce type de traitement thermique génère une forte consommation d'énergie et entraine une forte dégradation des composants de la batterie.

Le document EP 0 613 198 A1 décrit un procédé de récupération des matériaux issus des piles lithium. Les piles sont découpées soit sous jet d'eau haute pression soit sous une atmosphère inerte pour éviter un départ de feu. Puis, le lithium réagit avec de l'eau, un alcool ou de l'acide pour former, respectivement, de l'hydroxyde de lithium, un alcoxyde de lithium ou un sel de lithium (LiCI, par exemple). Cependant, la mise en sécurité réalisée avec un découpage sous jet d'eau haute pression nécessite une forte consommation d'eau et génère des gaz H₂ sous air.

Les documents WO 2015/192743 A1, CN 104 124 487 B et EP 1981115 A1 décrivent des procédés comprenant une étape de broyage d'une batterie puis une étape ultérieure au cours de laquelle les broyats ou une partie des broyats sont mis en contact avec une solution contenant un liquide ionique ou un sel fondu. Les solutions ne comprennent pas d'espèce redox.

À ce jour, les différents procédés décrits ci-dessus nécessitent de réaliser des traitements à haute température, des traitements cryogéniques, et/ou sous atmosphère contrôlée, qui sont des conditions difficilement industrialisables et/ou coûteuses.

### EXPOSÉ DE L'INVENTION

Un but de la présente invention est de proposer un procédé permettant de remédier aux inconvénients de l'art antérieur, et en particulier un procédé de broyage d'un générateur électrochimique facilement industrialisable, ne nécessitant pas l'utilisation de hautes températures, de très basses températures et/ou d'atmosphère contrôlée.

Ce but est atteint par un procédé de broyage d'un générateur électrochimique comprenant une électrode négative contenant du lithium ou du sodium et une électrode positive, le procédé comprenant une étape au cours de laquelle le générateur électrochimique est broyé dans une solution de liquide ionique comprenant un liquide ionique et une espèce redox dite oxydante apte à être réduite sur l'électrode négative de manière à décharger le générateur électrochimique.

L'invention se distingue fondamentalement de l'art antérieur par la mise en oeuvre du broyage du générateur électrochimique, en présence d'une solution de liquide ionique comprenant un liquide ionique et une espèce redox.

Le broyage assure l'ouverture de la batterie et l'accès au lithium ou au sodium. La solution liquide ionique sécurise l'ouverture du générateur électrochimique et permet l'introduction d'une espèce redox réactive qui réalise l'action de décharge par oxydo-réduction avec le lithium (ou le sodium) simultanément au broyage.

L'absence d'eau permet d'éviter la génération d'hydrogène, d'oxygène et/ou de chaleur, qui peuvent générer des atmosphères explosives.

Par la suite, lorsque l'on décrit le lithium, le lithium peut être remplacé par le sodium.

Selon un premier exemple, dans le cas d'un accumulateur lithium-métal, la réaction de réduction de l'espèce redox dite oxydante conduit à l'oxydation du lithium métallique sous forme ionique.

Selon un autre exemple, dans le cas d'un accumulateur lithium-ion, la réaction de réduction de l'espèce redox dite réductrice conduit à la désinsertion de l'ion lithium du matériau actif de l'électrode négative.

Les ions libres extraits de l'anode, migrent à travers l'électrolyte conducteur ionique et sont immobilisés dans la cathode où ils forment un oxyde de lithium thermodynamiquement stable. Par thermodynamiquement stable, on entend que l'oxyde ne réagit pas violemment avec l'eau et/ou l'air.

Avec le procédé de broyage selon l'invention, le lithium est extrait rapidement de l'électrode négative (anode) tout en évitant les risques d'inflammation et/ou d'explosion.

Avantageusement, la solution comprend une deuxième espèce redox dite réductrice apte à être oxydée sur l'électrode positive, l'espèce redox dite oxydante et l'espèce redox dite réductrice formant un couple d'espèce redox.

Par couple redox, aussi appelé médiateur redox ou navette électrochimique ou navette redox, on entend un couple oxydant/réducteur (Ox/Red) en solution dont l'oxydant peut être réduit sur l'anode (électrode négative) et le réducteur peut être oxydé sur la cathode (électrode positive). Le couple redox assure les réactions redox et donc la décharge du générateur, de sorte que le milieu reste intact et évite toute consommation de réactif.

La ou les espèces redox permettent de décharger significativement voire totalement le générateur électrochimique en diminuant l'énergie chimique des électrodes, et donc la différence de potentiel entre les électrodes (anode et cathode). Cette décharge diminue également de l'effet de court-circuit interne.

Le procédé est économique puisque le couple redox en solution assure à la fois et simultanément les réactions redox sur les électrodes du générateur électrochimique, de sorte que la consommation en réactif est nulle ; la solution peut être utilisée pour mettre en sécurité plusieurs générateurs électrochimiques successivement.

Avantageusement, le couple d'espèce redox est un couple métallique, de préférence choisi parmi Mn²⁺/Mn³⁺, Co²⁺/Co³⁺, Cr²⁺/Cr³⁺, Cr³⁺/Cr⁶⁺, V²⁺/V³⁺, V⁴⁺/V⁵⁺, Sn²⁺/Sn⁴⁺, Ag⁺/Ag²⁺, Cu⁺/Cu²⁺, Ru⁴⁺/Ru⁸⁺ ou Fe²⁺/Fe³⁺, un couple de molécules organiques, un couple de métallocènes tel que Fc/Fc⁺, ou un couple de molécules halogénées comme par exemple Cl₂/Cl⁻ ou Cl⁻/Cl³⁻.

Avantageusement, la solution liquide ionique comprend un liquide ionique additionnel.

Avantageusement, la solution liquide ionique forme un solvant eutectique profond.

Avantageusement, le générateur électrochimique est immergé dans la solution liquide ionique.

Avantageusement, la décharge du générateur électrochimique est réalisée à une température allant de 0°C à 100°, et de préférence de 15°C à 60°C.

Avantageusement, la décharge du générateur électrochimique est réalisée sous air.

Avantageusement, le procédé comprend, préalablement à l'étape de décharge du générateur électrochimique, une étape de démantèlement et/ou une étape de tri.

Avantageusement, le procédé comprend, ultérieurement à l'étape de décharge du générateur électrochimique, une étape pyrométallurgique et/ou hydrométallurgique.

Le procédé de broyage selon l'invention présente de nombreux avantages :
- réaliser en une seule étape la mise en sécurité du générateur (décharge) et l'ouverture du générateur, ce qui représente un gain de temps et d'investissement important,
- ne pas mettre en oeuvre une étape de broyage en voie humide, ce qui évite les problèmes liés à la gestion de l'hydrogène, de l'oxygène et de la chaleur, et donc à la gestion d'atmosphère explosive (sécurité, traitement des affluents, surcoût économique), et ce qui évite d'utiliser d'importants volumes d'eau et de traiter les effluent aqueux ;
- ne pas utiliser de traitement thermique, ce qui évite les problématiques liées à l'émission des gaz (par exemple des gaz à effets de serre ou pour de tout autre gaz nocif et dangereux pour l'homme et l'environnement), notamment concernant leur traitement, et réduit les coûts financiers et énergétiques du procédé ;
- réduire considérablement les contraintes liées à l'utilisation d'eau car les liquides ioniques sont non-volatiles, ininflammables et chimiquement stables à des températures pouvant être supérieures à 200°C (par exemple entre 200°C et 400°C) ;
- ne pas nécessiter de maîtriser l'atmosphère gazeuse lors de l'ouverture des batteries, notamment en utilisant des gaz inertes, ce qui simplifie le procédé et le rend plus économique,
- accéder directement au lithium, ce qui assure une décharge extrêmement rapide du générateur, contrairement aux procédés de l'art antérieur dans lesquels l'étape de décharge nécessite plusieurs heures voire plusieurs jours,
- utiliser une seule espèce redox : il n'y a pas besoin d'utiliser un couple redox, ce qui élargit le choix et la nature des espèces disponibles puisque l'espèce doit simplement avoir un potentiel électrochimique supérieur à celui du lithium. Or, le lithium est l'espèce avec le plus petit potentiel électrochimique. Le lithium peut donc être extrait pas n'importe quelle espèce capable de se réduire à un potentiel supérieur à -3,05V vs. ENH.
   - traiter les générateurs endommagés, les générateurs non déchargés ou insuffisamment déchargés et/ou les générateurs que l'on ne peut pas décharger (car leurs terminaux sont dégradés et/ou corrodés) sans entraîner de problèmes de sécurité lors de leur ouverture.

L'ouverture par broyage évite la dépendance liée à l'état d'endommagement du générateur. L'utilisation d'un broyage en milieu exempt d'eau et d'air résout ce type de problématique.
- ne pas nécessiter de maîtriser l'atmosphère gazeuse lors de l'ouverture des batteries, notamment en utilisant des gaz inertes, ce qui simplifie le procédé et le rend plus économique,
- être rapide et simple à mettre en oeuvre.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
La figure 1 représente, de manière schématique, une vue en coupe, d'un générateur électrochimique, selon un mode de réalisation particulier de l'invention,
La figure 2 représente, de manière schématique, une vue en coupe, d'un générateur électrochimique selon un mode de réalisation particulier du procédé de l'invention.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

Par la suite, même si la description fait référence à un accumulateur Li-ion, l'invention est transposable à tout générateur électrochimique, par exemple à une batterie comprenant plusieurs accumulateurs (appelées aussi batteries d'accumulateurs), connectés en série ou en parallèle, en fonction de la tension nominale de fonctionnement et/ou de la quantité d'énergie à fournir, ou encore à une pile électrique.

Ces différents dispositifs électrochimiques peuvent être de type métal-ion, par exemple lithium-ion ou sodium-ion, ou encore de type Li-métal,...

Il peut également s'agir d'un système primaire tel que Li/MnO₂, ou encore d'une batterie à circulation (« Redox Flow Battery »).

On choisira, avantageusement, un générateur électrochimique ayant un potentiel supérieur à 1,5V.

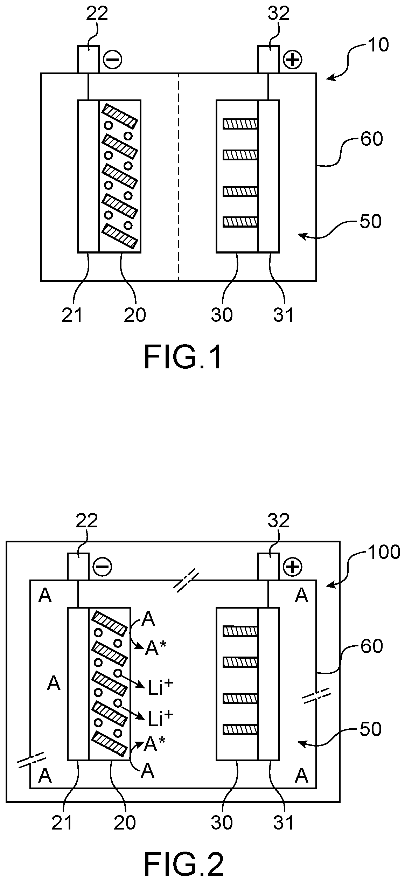

On se réfère tout d'abord à la figure 1 qui représente un accumulateur lithium-ion (ou Li-ion) 10. Une seule cellule électrochimique est représentée mais le générateur peut comprendre plusieurs cellules électrochimiques, chaque cellule comprenant une première électrode 20, ici l'anode, et une seconde électrode 30, ici la cathode, un séparateur 40 et un électrolyte 50. Selon un autre mode de réalisation, la première électrode 20 et la seconde électrode 30 pourraient être inversées.

L'anode (électrode négative) 20 est de préférence à base carbone, par exemple, en graphite pouvant être mélangé à un liant de type PVDF et déposé sur une feuille de cuivre. Il peut également s'agir d'un oxyde mixte de lithium comme le titanate de lithium Li₄Ti₅O₁₂ (LTO) pour un accumulateur Li-ion ou d'un oxyde mixte de sodium comme le titanate de sodium pour un accumulateur Na-ion. Il pourrait également s'agir d'un alliage de lithium ou d'un alliage de sodium en fonction de la technologie choisie.

La cathode (électrode positive) 30 est un matériau d'insertion d'ions lithium pour un accumulateur Li-ion. Il peut s'agir d'un oxyde lamellaire de type LiMOz, d'un phosphate LiMPO₄ de structure olivine ou encore d'un composé spinelle LiMn₂O₄. M représente un métal de transition. On choisira par exemple, une électrode positive en LiCoOz, LiMnOz, LiNiOz, Li₃NiMnCoO₆, ou LiFePO₄.

La cathode (électrode positive) 30 est un matériau d'insertion d'ions sodium pour un accumulateur Na-ion. Il peut s'agir d'un matériau du type oxyde sodié comprenant au moins un élément métallique de transition, d'un matériau du type phosphate ou sulfate sodié comprenant au moins un élément métallique de transition, d'un matériau du type fluorure sodié, ou encore d'un matériau du type sulfure comprenant au moins un élément métallique de transition.

Le matériau d'insertion peut être mélangé à un liant de type fluorure de polyvinylidène et déposé sur une feuille d'aluminium.

L'électrolyte 50 comporte des sels de lithium (LiPF₆, LiBF₄, LiClO₄ par exemple) ou des sels de sodium (N₃Na par exemple), en fonction de la technologie d'accumulateur choisie, solubilisés dans un mélange de solvants non aqueux. Le mélange de solvants est, par exemple, un mélange binaire ou ternaire. Les solvants sont, par exemple, choisis parmi les solvants à base de carbonates cycliques (carbonate d'éthylène, carbonate de propylène, butylène de carbonate), linéaires ou ramifiés (carbonate de diméthyle, carbonate de di-éthyle, carbonate d'éthyle méthyle, diméthoxyéthane) en proportion diverse.

De manière alternative, il pourrait également s'agir d'un électrolyte polymère comprenant une matrice polymère, en matériau organique et/ou inorganique, un mélange liquide comprenant un ou plusieurs sels métalliques, et éventuellement un matériau de renfort mécanique. La matrice polymère peut comprendre un ou plusieurs matériaux polymères par exemple choisis parmi un polyfluorure de vinylidène (PVDF), un polyacrylonitrile (PAN), un polyfluorure de vinylidène hexafluoropropylène (PVDF-HFP), ou un poly(liquide ionique) de type poly(N-vinylimidazolium) bis(trifluoromethanesulfonylamide)), N, N-diethyl- N- (2-methoxyethyl)- N-methylammonium bis(trifluoromethylsulfonyl)imide (DEMM-TFSI).

La cellule peut être enroulée sur elle-même autour d'un axe d'enroulement ou présenter une architecture empilée.

Un boitier 60 (« casing »), par exemple une poche en polymère, ou un emballage métallique, par exemple en acier, permet d'assurer l'étanchéité de l'accumulateur.

Chaque électrode 20, 30 est reliée à un collecteur de courant 21, 31 traversant le boitier 60 et formant, à l'extérieur du boitier 60, respectivement les terminaux 22, 32 (aussi appelés bornes de sortie ou pôles ou terminaux électriques). La fonction des collecteurs 21, 31 est double : assurer le support mécanique pour la matière active et la conduction électrique jusqu'aux terminaux de la cellule. Les terminaux aussi appelés pôles ou terminaux électriques) forment les bornes de sortie et sont destinés à être connectés à un « récepteur d'énergie ».

Selon certaines configurations, un des terminaux 22, 32 (par exemple celui relié à l'électrode négative) peut être relié à la masse du générateur électrochimique. On dit alors que la masse est le potentiel négatif du générateur électrochimique et que le terminal positif est le potentiel positif du générateur électrochimique. Le potentiel positif est donc défini comme le pôle/terminal positif ainsi que toutes les pièces métalliques raccordées par une continuité électrique depuis ce pôle.

Un dispositif électronique intermédiaire peut, éventuellement, être disposé entre le terminal qui est relié à la masse et cette dernière.

Le générateur électrochimique est broyé en présence d'une solution liquide ionique 100 (aussi appelée solution de liquide ionique) comprenant un liquide ionique et une espèce redox pouvant réagir avec le lithium de manière à le neutraliser, pour mettre le générateur électrochimique en sécurité.

Cette solution liquide ionique 100 simultanément empêche le contact entre le déchet (piles ou accumulateurs)/l'eau/l'air et assure la décharge du déchet par l'intermédiaire de l'espèce redox électrochimique présente dans le liquide ionique. L'ensemble est donc sécurisé vis-à-vis du triangle du feu.

De préférence, on décharge complètement le générateur électrochimique 10. Les ions libres sont immobilisés dans la cathode 30, où ils forment un oxyde de lithium métallique thermodynamiquement stable qui ne réagit pas violemment avec l'eau ou l'air. Ceci se fait à faible coût environnemental et économique. De plus, le traitement n'est pas être néfaste vis-à-vis du recyclage (et notamment l'électrolyte n'est pas dégradé). Le temps de décharge sera estimé suivant la nature des piles et accumulateurs et du taux de charge.

Le générateur électrochimique 10 est recouvert au moins partiellement par la solution liquide ionique. De préférence, il est complètement immergé dans la solution liquide ionique 100 (figure 2).

La solution liquide ionique 100 comprend au moins un liquide ionique LI₁, appelé liquide ionique solvant, et une espèce active redox A.

On entend par liquide ionique l'association comprenant au moins un cation et un anion qui génère un liquide avec une température de fusion inférieure ou voisine de 100°C. Il s'agit de sels fondus.

On entend par liquide ionique solvant un liquide ionique qui est stable sur le plan thermique et électrochimique minimisant un effet de dégradation du milieu durant le phénomène de décharge.

La solution liquide ionique peut également comprendre un ou plusieurs (deux, trois par exemple) liquides ioniques additionnels, c'est-à-dire qu'elle comprend un mélange de plusieurs liquides ioniques.

On entend par liquide ionique additionnel noté LI₂, un liquide ionique qui favorise une ou des propriétés vis-à-vis de l'étape de mise en sécurité et de décharge. Il peut s'agir, en particulier, d'une ou des propriétés suivantes : extinction, retardateur de flamme, navette redox, stabilisateur de sels, viscosité, solubilité, hydrophobicité, conductivité.

Avantageusement, le liquide ionique, et éventuellement, les liquides ioniques additionnels sont liquides à température ambiante (de 20 à 25°C).

Pour le liquide ionique solvant et pour le ou les liquides ioniques additionnels, le cation est, de préférence, choisi parmi la famille : imidazolium, pyrrolidinium, ammonium, pipéridinium et phosphonium.

On choisira, avantageusement, de préférence, un cation à large fenêtre cationique, suffisamment important pour envisager une réaction cathodique évitant ou minimisant la dégradation du liquide ionique.

Avantageusement LI₁ et LI₂ auront le même cation pour augmenter la solubilité de LI₂ dans LI₁. Dans les nombreux systèmes possibles, on privilégiera un milieu à faible coût et à faible impact environnemental (biodégradabilité), non toxique.

Avantageusement, on utilisera des anions permettant d'obtenir simultanément une large fenêtre électrochimique, une viscosité modérée, une température de fusion basse (liquide à température ambiante) et une bonne solubilité avec le liquide ionique et les autres espèces de la solution, et ceci ne conduisant pas à l'hydrolyse (dégradation) du liquide ionique.

L'anion TFSI est un exemple qui répond aux critères précédemment mentionnés pour de nombreuses associations avec par exemple LI₁ : [BMIM][TFSI], ou l'utilisation d'un liquide ionique de type [P66614][TFSI], le liquide ionique 1-ethyl-2,3-trimethyleneimidazolium bis(trifluoromethane sulfonyl)imide ([ETMIm][TFSI]), le liquide ionique N,N-diethyl-N-methyl-N-2-methoxyethyl ammonium bis(trifluoromethylsulfonyl)amide [DEME][TFSA], le liquide ionique N-Methyl-N-butylpyrrolidinium bis(trifluoromethylsufonyl)imide ([PYR14][TFSI]), le liquide ionique N-methyl-N-propylpiperidinium bis(trifluoromethanesulfonyl) imide (PP13-TFSI). L'anion peut également être de type bis(fluorosulfonyl)imide (FSA ou FSI), comme le liquide ionique N-methyl-N-propylpyrrolidinium FSI (P13-FSI), le N-methyl-N-propylpiperidinium FSI (PP13-FSI), le 1-ethyl-3-methylimidazolium FSI (EMI-FSI), etc...

L'anion du liquide ionique solvant LI₁ et/ou du liquide additionnel LI₂ peuvent peut être un anion complexant pour former un complexe avec la navette électrochimique.

D'autres associations sont envisageables, avec des liquides ioniques dont le cation sera associé à un anion qui sera indifféremment organique ou inorganique, ayant préférentiellement une large fenêtre anodique.

La solution liquide ionique 100 forme, avantageusement, un solvant eutectique profond (ou DES pour "deep eutectic solvents"). Il s'agit d'un mélange liquide à température ambiante obtenu par formation d'un mélange eutectique de 2 sels, de formule générale :

[Cat]⁺.[X]⁻.z[Y]

avec :
[Cat]⁺ est le cation du liquide ionique solvant (par exemple ammonium),
[X]⁻ l'anion halogénure (par exemple Cl⁻),
[Y] un acide de Lewis ou de Brönsted qui peut être complexé par l'anion X⁻ du liquide ionique solvant, et
z le nombre de molécules Y.

Les eutectiques peuvent être divisés en trois catégories suivant la nature de Y.

La première catégorie correspond à un eutectique de type I :
Y = MClₓ avec par exemple M = Fe, Zn, Sn, Fe, Al, Ga
La première catégorie correspond à un eutectique de type Il :
   Y = MClx.yH₂O avec par exemple M = Cr, Co, Cu, Ni, Fe
La première catégorie correspond à un eutectique de type III :
   Y= RZ avec par exemple Z = CONH₂, COOH, OH.

Par exemple, le DES est le chlorure de choline en association avec un donneur de liaison H d'une très faible toxicité, comme le glycérol ou l'urée, ce qui garantit un DES non toxique et à très faible coût.

Selon un autre exemple de réalisation, la chlorure de choline peut être remplacée par de la bétaïne. Même si ces systèmes possèdent une fenêtre de stabilité électrochimique limitée, ils permettent de garantir le noyage et la désactivation d'un accumulateur, éventuellement, ouvert.

Avantageusement, on choisira un composé « Y » pouvant jouer le rôle de navette électrochimique, pouvant être oxydé et/ou réduit. Par exemple, Y est un sel de métal, pouvant être dissous dans la solution liquide ionique de manière à former des ions métalliques. Par exemple, Y contient du fer.

À titre illustratif, on peut former un eutectique entre un liquide ionique à anion chlorure et des sels métalliques FeCl₂ et FeCl₃ pour différentes proportions et avec différents cations.

Il est également possible de réaliser ce type de réactions avec des eutectiques de type Il qui intègrent dans les sels métalliques des molécules d'eau lorsque la proportion en eau est faible cela ne génère pas de danger. Par faible, on entend typiquement moins de 10% en masse de la solution, par exemple de 5 à 10% en masse de la solution.

On peut également utiliser des eutectiques de type III qui associent le liquide ionique et des espèces donneuses de liaisons hydrogènes (Y), avec un mélange de type [LI₁]/[Y] ou LI₁ peut être un ammonium quaternaire et Y une molécule complexante (donneur de liaison hydrogène) comme l'urée, l'éthylène glycol, la thiourée, etc....

On peut également réaliser un mélange qui va avantageusement modifier les propriétés de la solution pour la décharge du milieu. On peut notamment associer un liquide ionique solvant de type [BMIM][NTF₂] très stable et liquide à température ambiante, mais qui solubilise faiblement la navette électrochimique (ou médiateur redox), comme un chlorure de fer.

Par exemple, on peut associer un liquide ionique additionnel LI₂ de type [BMIM][CI] qui favorisera la solubilisation d'un sel métallique sous la forme d'un chlorure par complexation avec l'anion de LI₂. Ceci permet de simultanément avoir de bonnes propriétés de transport, une bonne solubilité du médiateur redox et donc favoriser le phénomène de décharge.

La solution 100 comprend une espèce redox. Il s'agit d'un ion ou d'une espèce en solution pouvant être oxydée sur l'électrode négative selon A → A^{∗} avec A^{∗} la forme oxydée de l'espèce A (figure 2). L'espèce redox permet de mettre en sécurité l'accumulateur en extrayant le lithium de l'électrode négative.

Le procédé proposé rend l'accumulateur non réactif à l'air.

Il est également possible d'utiliser un couple électrochimique ou une de leur association. De préférence, il s'agit d'un couple redox jouant le rôle de navette électrochimique (ou de médiateur redox) pour réduire la dégradation du milieu, en assurant les réactions redox.

On entend par couple redox, un oxydant et un réducteur en solution capable d'être, respectivement, réduit et oxydé sur les électrodes des piles. Leur oxydation/réduction peut, avantageusement, permettre de régénérer les espèces redox initialement présentes en solution. L'utilisation d'une navette électrochimique permet de faire fonctionner le dispositif en boucle fermée et de réduire la dégradation du milieu.

L'oxydant et le réducteur peuvent être introduits en proportion équimolaire ou non équimolaire.

Une des espèces redox peut provenir du générateur lui-même. Il peut s'agir notamment de cobalt, nickel et/ou manganèse.

Le couple redox peut être un couple électrochimique métallique ou une de leurs associations : Mn²⁺/Mn³⁺, Co²⁺/Co³⁺, Cr²⁺/Cr³⁺, Cr³⁺/Cr⁶⁺, V²⁺/V³⁺, V⁴⁺/V⁵⁺, Sn²⁺/Sn⁴⁺, Ag⁺/Ag²⁺, Cu⁺/Cu²⁺, Ru⁴⁺/Ru⁸⁺ ou Fe²⁺/Fe³⁺.

L'espèce redox et le couple redox peuvent également être choisis parmi les molécules organiques, et en particulier parmi : 2,4,6-tri-t-butylphénoxyl, nitronyl nitroxide/2,2,6,6-tetraméthyl-1-piperidinyloxy (TEMPO), tétracyanoéthylène, tétraméthylphénylènedi-amine, dihydrophénazine, des molécules aromatiques par exemple ayant un groupement méthoxy, un groupe N,N-diméthylamino tel que l'anisole méthoxybenzène, le diméthoxybenzène, ou encore un groupement N,N-diméthylaniline comme le N,N-diméthylaminobenzène. On peut également mentionner le 10-méthyl-phénothiazine (MPT), le 2,5-di-tert-butyl-1,4-diméthoxybenzène (DDB) et le 2-(pentafluorophényl)-tétrafluoro-1,3,2-benzodioxaborole (PFPTFBDB).

Il peut également s'agir de la famille des métallocènes (Fc/Fc+, Fe(bpy)₃(ClO₄)₂ et Fe(phen) ₃(ClO₄)₂ et ses dérivés) ou de la famille des molécules halogénés (Cl₂/Cl⁻, Cl⁻/Cl³⁻ Br₂/Br⁻, I₂/I⁻, I⁻/I₃⁻).

On choisira notamment un bromure ou un chlorure. De préférence il s'agit d'un chlorure, pouvant facilement complexer les métaux. Par exemple, le fer, complexé par l'anion chlorure, forme du FeCl₄⁻ qui peut diminuer la réactivité de l'électrode négative.

Il peut également s'agir du tétraméthylphénylènediamine.

On pourra également associer plusieurs couples redox, dont les métaux des ions métalliques sont identiques ou différents.

On choisira par exemple Fe²⁺/Fe³⁺ et/ou Cu⁺/Cu²⁺. Ces derniers sont solubles dans leurs deux états d'oxydation, ils ne sont pas toxiques et ils ne dégradent pas le liquide ionique.

La solution peut comporter un agent d'extinction et/ou un retardateur de flamme visant à prévenir un emballement thermique, notamment en cas d'ouverture d'accumulateur. Il peut s'agir d'un alkyl phosphate, éventuellement fluoré (alkyl phosphate fluoré), comme le phosphate de triméthyle, le phosphate de triéthyle, ou le tris(2,2,2-trifluoroéthyl) phosphate). La concentration en espèce active peut être de 80% en masse à 5%, de préférence de 30% à 10% en masse.

Optionnellement, la solution liquide ionique peut comprendre un agent desséchant, et/ou un agent favorisant le transport de matière, et/ou un agent de protection qui est stabilisateur/réducteur d'espèces corrosives et toxiques par exemple choisi parmi PFs, HF et POF₃.

L'agent favorisant le transport de matière est, par exemple, une fraction d'un co-solvant pouvant être ajouté pour diminuer la viscosité.

Il peut s'agir d'une faible proportion d'eau, comme 5% d'eau.

De préférence, on choisira un solvant organique pour agir efficacement sans générer de risques vis-à-vis de la décharge ou de l'inflammabilité. Il peut s'agir de vinylène carbonate (VC), de gamma-butyrolactone (y-BL), de propylène carbonate (PC), de poly(éthylène glycol), de diméthyl éther. La concentration de l'agent favorisant le transport de matière va, avantageusement, de 1% à 40% et plus avantageusement de 10% à 40 % en masse.

L'agent de protection apte à réduire et/ou stabiliser des éléments corrosifs et/ou toxiques est, par exemple, un composé de de type butylamine, un carbodiimide (type N,N-dicyclohexylcarbodiimide), N,N-diethylamino trimethyl-silane, le tris(2,2,2-trifluoroethyl) phosphite (TTFP), un composé à base d'amine comme le 1-méthyl-2-pyrrolidinone, un carbamate fluoré ou le hexamethyl-phosphoramide. Cela peut également être un composé de la famille des cyclophosphazène comme l'hexaméthoxycyclotriphosphazène

Avantageusement, la solution liquide ionique comprend moins de 10% massique d'eau, préférentiellement moins de 5 % massique.

Encore plus préférentiellement, la solution liquide ionique est dépourvue d'eau.

Le procédé peut être mis en oeuvre à des températures allant de 0°C à 100°C, de préférence de 20°C à 60°C et encore plus préférentiellement il est mis en oeuvre à température ambiante (20-25°C).

Le procédé peut être réalisé sous air, ou sous atmosphère inerte, par exemple sous argon, dioxyde de carbone, azote ou un de leurs mélanges. Il peut également être réalisé dans une atmosphère dont la teneur en oxygène est contrôlée.

Dans le cas où le générateur électrochimique est immergé dans la solution ionique, la solution peut être agitée pour améliorer l'apport en réactif. Par exemple, il s'agit d'une agitation entre 50 et 2000 tour/min, et de préférence, entre 200 et 800 tour/min.

A tire illustratif l'étape de broyage est réalisée dans un procédé de recyclage pouvant comprendre les étapes suivantes : tri, démantèlement, broyage puis recyclage des éléments à valoriser (par exemple par pyrométallurgie, hydrométallurgie,...).

L'ouverture du générateur pour accéder à ses fractions valorisables est réalisée en toute sécurité.

### Exemple illustratif et non limitatif d'un mode de réalisation :

Dans cet exemple, la décharge est réalisée dans un milieu de type glycéline (mélange de chlorure de choline et de glycérol).

La solution liquide ionique est un mélange de liquide ionique comprenant du chlorure de choline et du glycérol avec un rapport volumique 1:2 et un Cp de 2,2 J.g⁻¹.K⁻¹, du phosphate de triméthyle à 5 % massique comme agent d'extinction. Après séchage de la solution, la zone de broyage d'un broyeur à couteaux étanche est remplie de la solution. Puis une pile de type Li-ion 18650 est injectée dans le broyeur à température ambiante. La rotation est de 50 tour/min. Le broyage permet simultanément l'ouverture de la pile et la réaction entre le lithium et le bain, ce qui assure l'action de décharge et la mise en sécurité de la pile.

## Revendications

1. Procédé de broyage d'un générateur électrochimique (10) comprenant une électrode négative (20) contenant du lithium ou du sodium et une électrode positive (30), le procédé comprenant une étape au cours de laquelle le générateur électrochimique (10) est broyé dans une solution de liquide ionique (100) comprenant un liquide ionique et une espèce redox dite oxydante apte à être réduite sur l'électrode négative (20) de manière à décharger le générateur électrochimique (10).

2. Procédé selon la revendication précédente, **caractérisé en ce que** la solution liquide ionique (100) comprend une deuxième espèce redox dite réductrice apte à être oxydée sur l'électrode positive (30), l'espèce redox dite oxydante et l'espèce redox dite réductrice formant un couple d'espèce redox.

3. Procédé selon la revendication précédente, **caractérisé en ce que** le couple d'espèce redox est un couple métallique, de préférence choisi parmi Mn²⁺/Mn³⁺, Co²⁺/Co³⁺, Cr²⁺/Cr³⁺, Cr³⁺/Cr⁶⁺, V²⁺/V³⁺, V⁴⁺/V⁵⁺, Sn²⁺/Sn⁴⁺, Ag⁺/Ag²⁺, Cu⁺/Cu²⁺, Ru⁴⁺/Ru⁸⁺ ou Fe²⁺/Fe³⁺, un couple de molécules organiques, un couple de métallocènes tel que Fc/Fc⁺, ou un couple de molécules halogénées comme par exemple Cl₂/Cl⁻ ou Cl⁻/Cl³⁻.

4. Procédé selon l'une quelconque des revendications précédentes, **caractérisé en ce que** la solution liquide ionique (100) comprend un liquide ionique additionnel.

5. Procédé selon l'une quelconque des revendications précédentes, **caractérisé en ce que** la solution liquide ionique (100) forme un solvant eutectique profond.

6. Procédé selon l'une quelconque des revendications précédentes, **caractérisé en ce que** le broyage du générateur électrochimique (10) est réalisé sous atmosphère inerte.

7. Procédé selon l'une quelconque des revendications précédentes, **caractérisé en ce qu'**il comprend, préalablement à l'étape de broyage du générateur électrochimique (10), une étape de démantèlement et/ou une étape de tri.

8. Procédé selon l'une quelconque des revendications précédentes, **caractérisé en ce qu'**il comprend, ultérieurement à l'étape de broyage du générateur électrochimique (10), une étape pyrométallurgique et/ou hydrométallurgique.

9. Procédé selon l'une quelconque des revendications précédentes, **caractérisé en ce que** le générateur électrochimique (10) est un générateur lithium-ion ou un générateur sodium-ion.

10. Procédé selon l'une quelconque des revendications précédentes, **caractérisé en ce que** le procédé est réalisé à une température allant de 0°C à 100°C.

## Patentansprüche

1. Verfahren zum Zerkleinern eines elektrochemischen Generators (10), eine negative Elektrode (20) umfassend, die Lithium oder Natrium enthält, und eine positive Elektrode (30), wobei das Verfahren einen Schritt umfasst, bei dem der elektrochemische Generator (10) in eine flüssige ionische Lösung (100) zerkleinert wird, die eine ionische Flüssigkeit und eine Redoxspezies, oxidierend genannt, umfasst, die geeignet ist, an der negativen Elektrode (20) reduziert zu werden, um den elektrochemischen Generator (10) zu entladen.

2. Verfahren nach dem vorhergehenden Anspruch, **dadurch gekennzeichnet, dass** die flüssige ionische Lösung (100) eine zweite Redoxspezies, reduzierend genannt, umfasst, die geeignet ist, an der positiven Elektrode (30) oxidiert zu werden, wobei die Redoxspezies, oxidierend genannt, und die Redoxspezies, reduzierend genannt, ein Redoxspeziespaar bilden.

3. Verfahren nach dem vorhergehenden Anspruch, **dadurch gekennzeichnet, dass** das Redoxspeziespaar ein Metallpaar ist, vorzugsweise ausgewählt aus Mn²⁺/Mn³⁺, Co²⁺/Co³⁺, Cr²⁺/Cr³⁺, Cr³⁺/Cr⁶⁺, V²⁺/V³⁺, V⁴⁺/V⁵⁺, Sn²⁺/Sn⁴⁺, Ag⁺/Ag²⁺, Cu⁺/Cu²⁺, Ru⁴⁺/Ru⁸⁺ oder Fe²⁺/Fe³⁺, einem organischen Molekülpaar, einem Metallocenepaar wie Fc/Fc⁺ oder einem Halogenmolekülpaar wie zum Beispiel Cl₂/Cl⁻ oder Cl⁻ /Cl³⁻.

4. Verfahren nach einem der vorhergehenden Ansprüche, **dadurch gekennzeichnet, dass** die flüssige ionische Lösung (100) eine zusätzliche ionische Flüssigkeit umfasst.

5. Verfahren nach einem der vorhergehenden Ansprüche, **dadurch gekennzeichnet, dass** die flüssige ionische Lösung (100) ein stark eutektisches Lösungsmittel bildet.

6. Verfahren nach einem der vorhergehenden Ansprüche, **dadurch gekennzeichnet, dass** das Zerkleinern des elektrochemischen Generators (10) unter inerter Atmosphäre durchgeführt wird.

7. Verfahren nach einem der vorhergehenden Ansprüche, **dadurch gekennzeichnet, dass** es vor dem Schritt der Zerkleinerung des elektrochemischen Generators (10) einen Zerlegungsschritt und/oder einen Sortierschritt umfasst.

8. Verfahren nach einem der vorhergehenden Ansprüche, **dadurch gekennzeichnet, dass** es nach dem Schritt der Zerkleinerung des elektrochemischen Generators (10) einen pyrometallurgischen und/oder hydrometallurgischen Schritt umfasst.

9. Verfahren nach einem der vorhergehenden Ansprüche, **dadurch gekennzeichnet, dass** der elektrochemische Generator (10) ein Lithium-Ionen-Generator oder ein Natrium-Ionen-Generator ist.

10. Verfahren nach einem der vorhergehenden Ansprüche, **dadurch gekennzeichnet, dass** das Verfahren bei einer Temperatur von 0 °C bis 100 °C durchgeführt wird.

## Claims

1. Method for crushing an electrochemical generator (10) comprising a negative electrode (20) containing lithium or sodium and a positive electrode (30), the method comprising a step wherein the electrochemical generator (10) is crushed in an ionic liquid solution (100) containing an ionic liquid and a so-called oxidising redox species that can be reduced at the negative electrode (20) so as to discharge the electrochemical generator (10).

2. Method according to the preceding claim, **characterised in that** the ionic liquid solution (100) contains a second so-called reducing redox species capable of being oxidised at the positive electrode (30), the so-called oxidising redox species and the so-called reducing redox species forming a redox species couple.

3. Method according to the preceding claim, **characterised in that** the redox species couple is a metal couple, preferably chosen from Mn²⁺/Mn³⁺, Co²⁺/Co³⁺, Cr²⁺/Cr³⁺, Cr³⁺/Cr⁶⁺, V²⁺/V³⁺, V⁴⁺/V⁵⁺, Sn²⁺/Sn⁴⁺, Ag⁺/Ag²⁺, Cu⁺/Cu²⁺, Ru⁴⁺/Ru⁸⁺ or Fe²⁺/Fe³⁺, an organic molecule couple, a metallocene couple such as Fc/Fc⁺, or a halogenated molecule couple, for example Cl₂/Cl⁻ or Cl⁻/Cl³⁻.

4. Method according to any of the preceding claims, **characterised in that** the ionic liquid solution (100) contains an additional ionic liquid.

5. Method according to any of the preceding claims, **characterised in that** the ionic liquid solution (100) forms a deep eutectic solvent.

6. Method according to any of the preceding claims, **characterised in that** the electrochemical generator (10) is crushed in an inert atmosphere.

7. Method according to any of the preceding claims, **characterised in that** it comprises, prior to the step of crushing the electrochemical generator (10), a dismantling step and/or a sorting step.

8. Method according to any of the preceding claims, **characterised in that** it comprises, subsequent to the step of crushing the electrochemical generator (10), a pyrometallurgical and/or hydrometallurgical step.

9. Method according to any of the preceding claims, **characterised in that** the electrochemical generator (10) is a lithium-ion generator or a sodium-ion generator.

10. Method according to any of the preceding claims, **characterised in that** the method is carried out at a temperature ranging from 0°C to 100°C.
